# EUROPEAN PATENT APPLICATION

(11) **EP 1 950 938 A1**
(43) Date of publication of application: **30.07.2008**
(21) Application number: 07021814.4
(22) Date of filing: 09.11.2007
(51) Int. Cl.: H04M 1/23

(54) **Information processing terminal**

(30) Priority: 16.11.2006 JP 2006310454
(71) Applicant: Sharp Kabushiki Kaisha, Osaka 545-8522 (JP)
(72) Inventor: Kuroda, Mami, Higashihiroshima-shi Hiroshima 739-0042 (JP)
(74) Representative: Müller - Hoffmann & Partner

(57) **Abstract**

There is provided a portable information processing terminal that places a reduced strain on a finger and is improved in operability. A housing (18) of a cellular phone has a 15-key keypad (32). Of the buttons of 15-key keypad (32), the buttons disposed at the opposite ends of each row have a curved ridge. The manipulating surface of each button has inclined areas that extend upward from the ridge (toward a cursor key (24)) and downward from the ridge (toward the bottom of housing (18)).

## Description

This nonprovisional application is based on Japanese Patent Application No. 2006-310454 filed with the Japan Patent Office on November 16, 2006, the entire contents of which are hereby incorporated by reference.

### BACKGROUND OF THE INVENTION

### Field of the Invention

The present invention relates to a portable information processing terminal. In particular, the invention relates to a structure of a manipulating part that accepts a manipulation for providing an input to the terminal.

### Description of the Background Art

Cellular phones and other portable information processing terminals are provided with a set of buttons for inputting numerals or the like in the form of a keyboard, such as a ten-key keypad and a 12-key keypad. Such wireless communication terminals are designed to be operable with one hand in order to be portable. Specifically, a user of such wireless communication terminals can hold the terminal with one hand and input numerals and characters only with the thumb of the same hand.

However, if the user performs an input operation only with the thumb, the input operation can be erroneous. Thus, for example, Japanese Patent Laying-Open No. 2001-312944 discloses a cellular phone having an integral multi-directional cursor key that is less likely to cause an erroneous manipulation. The cellular phone disclosed in Japanese Patent Laying-Open No. 2001-312944 has a key control device that has a single-piece button key (five-directional cursor key) 13 disposed on a central enter switch 3 and surrounding direction-indicating switches 4 to 7 and is capable of inputting directional commands for five directions including the central one direction and the surrounding four directions. The key control device has a central convex part 20 in the center area thereof corresponding to switch 3 and a convex annular part 21 in the peripheral area thereof corresponding to switches 4 to 7. A recess 23, which is substantially V-shaped in cross section, is formed at the border of the two areas to separate the center area and the peripheral area from each other. The protrusions and the depression on the top of the key control device enable the user to find the key for inputting their intended direction only based on the tactile sense of the finger.

In addition, there has been proposed a cellular phone the manipulating buttons of which have a wavy manipulating surface (see "K-tai Watch, Wavy keys characteristic of W41CA", K-tai Watch website, K-tai Watch editorial office, 2006, http://k-tai.impress.co.jp/cda/parts/image_for_link/113381-27904-12-1.html).

However, in the case of the cellular phone the manipulating buttons of which have a wavy manipulating surface, buttons closer to the user may be difficult to press because the buttons are close to the thumb, despite the wavy shape thereof.

In addition, in general, if a user successively presses a button of a cellular phone or other wireless communication terminal to input a series of characters, a strain can be placed on the pressing finger (the thumb, for example), and the user can feel pain.

### SUMMARY OF THE INVENTION

The present invention has been made in order to solve the problems described above. An object of the present invention is to provide a wireless communication terminal improved in operability.

In summary, in order to attain the object described above, an information processing terminal according to an aspect of the present invention includes a housing, and a plurality of manipulating parts arranged side by side in a first direction of the housing and configured to accept a pressing manipulation for providing an input to the information processing terminal. A manipulating part disposed at one end of the plurality of manipulating parts arranged in the first direction has a ridge, which is formed by a series of protrusions, on a manipulating surface for accepting the pressing manipulation. The ridge extends in a direction from the other end to said one end of the plurality of manipulating parts in such a manner that the ridge deviates from a virtual line extending in the first direction.

Preferably, the ridge includes a curved part. Preferably, the ridge includes a straight part. Preferably, the information processing terminal further includes a display part configured to display an image The ridge is curved toward the display part while extending in the direction form said the other end to said one end.

Preferably, an area of the manipulating surface for accepting the pressing manipulation that extends from the ridge toward the display part is curved or flat in cross section. Preferably, an area of the manipulating surface for accepting the pressing manipulation that extends from the ridge toward the display part is tapered in cross section.

Preferably, an end of the ridge located toward said one end is located on a side edge extending in a second direction perpendicular to the first direction of side edges of the manipulating surface for accepting the pressing manipulation. Preferably, an end of the ridge located toward said the other end is located on a side edge extending in the second direction of the side edges of the manipulating surface for accepting the pressing manipulation. Preferably, an end of the ridge located toward said the other end is located on a side edge extending in the first direction of the side edges of the manipulating surface for accepting the pressing manipulation.

Preferably, a plurality of rows of the manipulating parts are arranged in a second direction perpendicular to the first direction.

Preferably, the inclination of the manipulating surfaces of the plurality of manipulating parts arranged at said one end in the second direction varies among the manipulating parts.

Preferably, another ridge, which is formed by a series of protrusions, is formed on a manipulating surface of a manipulating part disposed at said the other end of the plurality of manipulating parts. The other ridge extends in a direction from said one end to said the other end in such a manner that the other ridge deviates from the virtual line.

Preferably, the other ridge includes a curved part. Preferably, the other ridge includes a straight part.

Preferably, the information processing terminal further includes a display part configured to display an image. The other ridge extends toward the display part in the direction form said one end to said the other end.

Preferably, an area of the manipulating surface for accepting the pressing manipulation that extends from the other ridge toward the display part is curved or flat in cross section.

Preferably, an area of the manipulating surface for accepting the pressing manipulation that extends from the other ridge toward the display part is tapered in cross section.

Preferably, an end of the other ridge located toward said the other end is located on a side edge extending in a second direction perpendicular to the first direction of side edges of the manipulating surface for accepting the pressing manipulation.

Preferably, the other end of the other ridge located toward said one end is located on a side edge extending in the second direction of the side edges of the manipulating surface for accepting the pressing manipulation.

Preferably, the other end of the other ridge located toward said one end is located on a side edge extending in the first direction of the side edges of the manipulating surface for accepting the pressing manipulation.

Preferably, the ridge and the other ridge form a U-shape.

Preferably, the plurality of manipulating parts include a plurality of buttons for accepting input of a number.

Preferably, the plurality of manipulating parts include a plurality of buttons for accepting input of a character.

Preferably, the information processing terminal further includes an editor configured to create a document based on a character input by manipulation of the plurality of buttons.

Preferably, the information processing terminal further includes a sensing part configured to sense the pressing manipulation on any of the plurality of manipulating parts. The sensing part has a protrusion. The position of the protrusion corresponds to the position of the ridge formed on the manipulating surface

Since the portable information processing terminal according to the present invention has a manipulating surface on which ridges are formed, the contact area between the finger of a user of the terminal and the manipulating surface is increased. As a result, the strain placed on the finger pressing the manipulating surface is not concentrated at one part of the finger, and thus, finger fatigue is reduced.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates a front view of a cellular phone 10 according to an embodiment of the present invention;
Fig. 2 illustrates a perspective view of a housing 18 of cellular phone 10;
Fig. 3A illustrates a front view of housing 18;
Fig. 3B illustrates a cross-sectional view taken along the line A-B in Fig. 3A;
Fig. 4 illustrates an enlarged view of a button 47 on which a numeral "4" is printed;
Fig. 5 illustrates an enlarged cross-sectional view of housing 18;
Fig. 6 is a diagram showing a manipulating surface of a housing of a cellular phone 500 according to a first modification of the embodiment;
Fig. 7 is a diagram showing a manipulating surface of a housing of a cellular phone 600 according to a second modification of the embodiment;
Fig. 8 is a diagram showing a manipulating surface of a housing of a cellular phone 700 according to a third modification of the embodiment;
Fig. 9 illustrates a cross-sectional view of a 15-key keypad of a cellular phone according to a fourth modification of the embodiment;
Fig 10 illustrates a cross-sectional view of a 15-key keypad of a cellular phone according 10 a fifth modification of the embodiment, and
Fig. 11 is a block diagram showing a hardware configuration of cellular phone 10.

### DESCRIPTION OF THE PREFERRED EMBODIMENTS

In the following, with reference to the drawings, embodiments of the present invention will be described. In the following description, the same components are denoted by the same reference numerals and have the same names and the same functions. Therefore, detailed descriptions thereof will not be repeated.

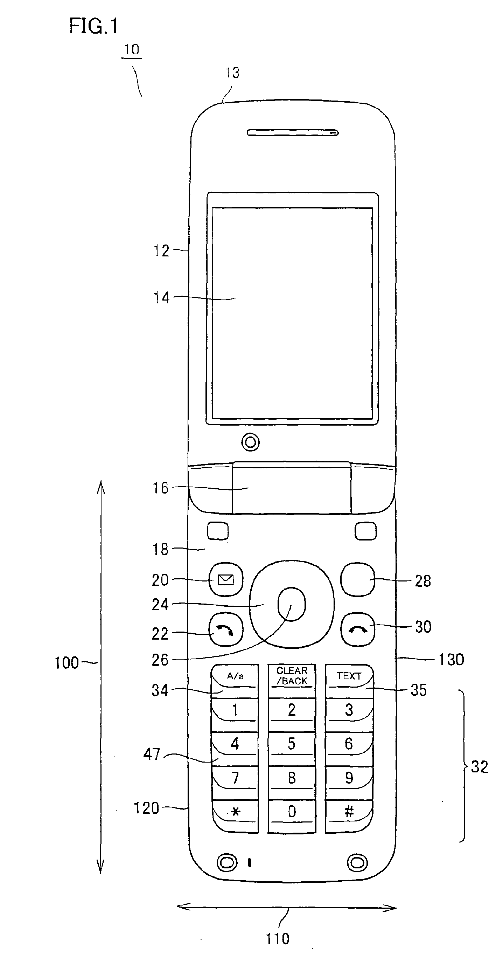

First, with reference to Fig. 1, a cellular phone 10 according to an embodiment of the present invention will be described. Although cellular phone 10 is a portable information processing terminal according to an aspect of the present invention, the information processing terminal according to the present invention is not limited to cellular phone 10. For example, the information processing terminal may be a terminal device, such as a personal digital assistant (PDA). Alternatively, the information processing terminal may be a terminal device, such as a game controller that is held by the hands and manipulated independently by the left and right hands.

Fig. 1 illustrates a front view of cellular phone 10. Cellular phone 10 includes housings 12 and 18, a display 14 disposed in housing 12, and a hinge 16 that couples housings 12 and 18 to each other. Housing 18 has key buttons 20, 22, 28 and 30 configured to accept input of an instruction to perform a preset function, a cursor key 24 configured to accept input of an instruction to move a cursor on display 14 from side to side and up and down, an enter button 26 configured to accept input of an instruction to confirm an item on display 14, and a 15-key keypad 32 consisting of 15 buttons arranged in a matrix.

Of the three buttons in each row of 15-key keypad 32, a button 34 closest to one side (the left side, for example) of cellular phone 10 has a ridge, which is formed by a series of protrusions. The ridge extends, from the other side (the right side, for example) of cellular phone 10 to the one side, to deviate from a virtual line parallel to the row (that is, the line of arrangement of the three buttons).

Similarly, a button closest to the other side (the right side, for example) has a ridge, which is formed by a series of protrusions. The ridge also extends to deviate from the virtual line from the one side to the other side.

A button 36 also has a ridge, which is formed by a series of protrusions. The ridge extends substantially straight. Thus, viewed from the front of cellular phone 10, the ridges on buttons 34, 35 and 36 look like a U shape.

Here, positions on cellular phone 10 according to this embodiment will be defined. A top part 13 of housing 12 is defined as the top of cellular phone 10. Positions in the housings of cellular phone 10 are defined based on a longitudinal direction 100 and a lateral direction 110. The side edges of cellular phone 10 extending in longitudinal direction 100 are defined as side edges 120 and 130.

Although cellular phone 10 is shown as a foldable cellular phone in Fig. 1, the positions are defined in the same way even if cellular phone 10 is not a foldable cellular phone.

Supposing that lateral direction 110 is a first direction, longitudinal direction 100, which is perpendicular to lateral direction 110, is defined as a second direction. If the cellular phone has a horizontally long manipulating part in another aspect of the present invention, the longitudinal direction of the cellular phone is defined as the first direction, and the lateral direction is defined as the second direction.

15-key keypad 32 contains three buttons in each row and five buttons in each column. 15-key keypad 32 includes so-called ten-key buttons to which numerals "0" to "9" are assigned and other buttons to each of which a symbol or character is assigned.

If cellular phone 10 has a document creation function, each of the ten-key buttons accepts input of a character. The document creation function is, for example, a function of creating and editing an E-mail message or other documents. The button to which a numeral "1" is assigned to the "A column" ("A-gyou" in the Japanese language). Which character in the A column is to be chosen depends on the number of pressings of the button. For example, if the button is pressed once, a hiragana character "a" of "a, i, u, e, o" is shown. If the button is pressed twice, a hiragana character "j" is shown. Similarly, if the button is pressed five times, a hiragana character "o" is shown. If the button is pressed six or more times, the hiragana character "a" and the following hiragana characters of the "A column" are shown again. As for the other columns (the "KA column" (ka-gyou) and "SA column"(sa-gyou), for example), characters are input in the same way.

Characters that can be input are not limited to hiragana characters, and katakana characters in the Japanese language can also be input in the same way. Furthermore, characters that can be input are not limited to Japanese characters. For example, alphabetic characters or other European or Asian characters or the like can be input. In those cases, a plurality of characters are associated with each button, and one of the plurality of characters is input depending on the number of pressings of the button.

A full stop, a comma and other symbols can also be input in the same way. Specifically, a plurality of symbols to be input are assigned to a certain button. Each symbol is chosen depending on the number of pressings of the button. In such a configuration, if cellular phone 10 is in an operation mode of document creation, the user of cellular phone 10 can input a plurality of characters, symbols or the like only using one button by changing the number of pressings of the button.

Those skilled in the art can easily understand the document creation function and other character input functions of cellular phone 10. Therefore, further detailed description of those functions will not be described.

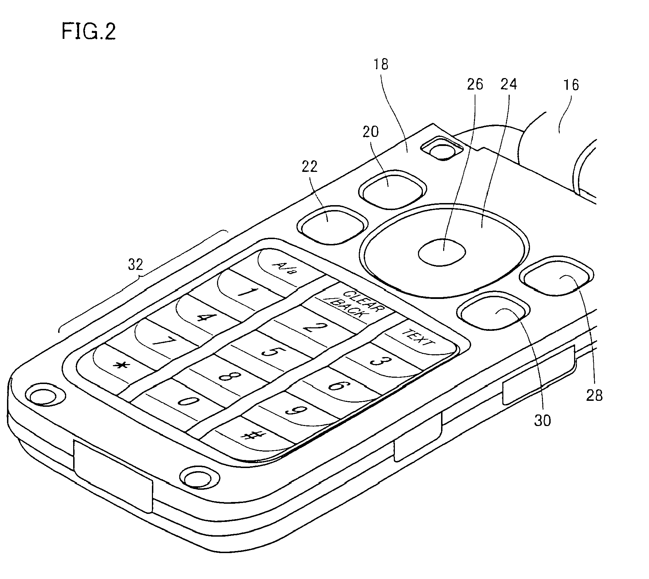

Fig. 2 illustrates a perspective view of housing 18. Each button of 15-key keypad 32 disposed on housing 18 has a ridged manipulating surface. The term "manipulating surface" refers to a surface on which a numeral or the like is printed and which accepts a pressing manipulation.

In a row of buttons, the button disposed at the far left of the row has a ridge that extends from the right edge to the left edge of the button to deviate from a straight line extending perpendicularly from the right edge of the button. The ridges of the buttons arranged in a row constitute a U shape. The top of the ridges is chamfered. This chamfering reduces the load on the finger pressing the buttons. In addition, in the case where different buttons are pressed to input a plurality of characters or symbols, the chamfering allows the finger to move smoothly on the manipulating surface of 15-key keypad 32.

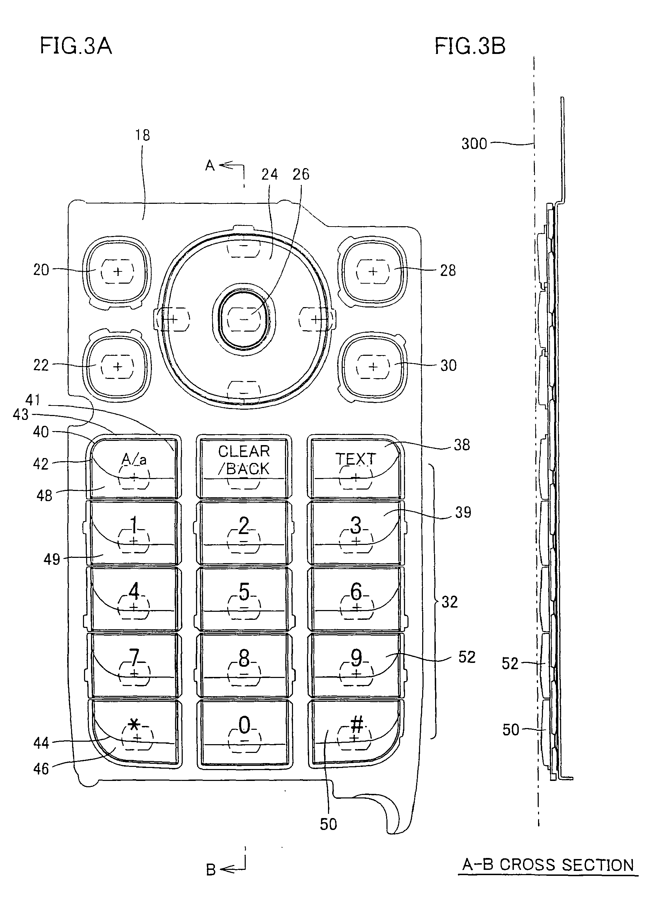

With reference to Figs. 3A and 3B, a structure of the buttons of cellular phone 10 will be further described. Fig. 3A illustrates a front view of housing 18.

With regard to a button 48, which is one of the buttons of 15-key keypad 32 on housing 18, the ridge on button 48 reaches to a left edge 42 of button 48. The ridge is curved white extending from a right edge 41 of button 48 to left edge 42. Specifically, the ridge is curved toward cursor key 24. In other words, the ridge is curved to deviate from the line of arrangement of the buttons in this row including button 48.

In this embodiment, the terms "right" and "left" refer to "right" and "left" when cellular phone 10 is viewed from the front thereof.

Since the ridge is curved in this way, it is ensured that, when the user is holding cellular phone 10 with the right hand, the finger moving from cursor key 24 to button 48 is stopped at button 48. Therefore, the user is prevented from accidentally pressing another button (a button 49, for example).

A button 38 is disposed at the far right of the row including button 48. Button 38 has, on the manipulating surface, a ridge that is curved while extending from the left edge to the right edge of button 38. Specifically, the ridge is curved around cursor key 24 not to be excessively separated from cursor key 24. In other words, the ridge is curved to deviate from the line of arrangement of the buttons in this row including button 48.

Since the ridge is curved in this way, it is ensured that, when the user is holding cellular phone 10 with the left hand, the finger moving from cursor key 24 to button 38 is stopped at button 38. Therefore, the user is prevented from accidentally pressing another button (a button 39, for example).

Alternatively, when the user is manipulating cellular phone 10 with the thumb of the right hand, the thumb is stopped at the curved ridge of button 38. Since the thumb does not move beyond button 38, the user can quickly input characters.

The shape of the ridge is not limited to that shown in Fig. 3A. For example, instead of the curved shape of buttons 48 and 38 shown therein, the ridge may include a straight part.

While the ridge extends to left edge 42 of button 48, the end point of the ridge may not be on the left edge of button 48. For example, the point may be a corner 40 of button 48. Alternatively, the ridge may end at a point on an upper edge 43 close to left edge 42 of button 48. The term "upper" used in this embodiment refers to the upper side when cellular phone 10 is viewed from the front thereof. In other words, the term "upper" refers to the top of cellular phone 10 when cellular phone 10 is held in the vertical position.

Other buttons of 15-key keypad 32 are configured similarly. Buttons disposed at the far right of 15-key keypad 32 are configured similarly except that the structure is inverted left-to-right.

While the curved ridges of the buttons of the five rows of 15-key keypad 32 are identical in shape in the above description, the shape of the curved ridges may vary with the row. For example, the degree of curvature of the curved ridges of the buttons in the row including button 48 may be smaller than that of the curved ridges of the buttons in the row including a button 50 (that is, the row closest to the user on housing 18). When the user holds cellular phone 10, the thumb of the right hand can barely reach and press button 48, while the user has to bend the thumb to press button 50 or a button 46 located at the far left of the row. In this case, since the curved ridges of the buttons closest to the user are more sharply curved, the load on the thumb due to successive pressings of 15-key keypad 32 can be reduced.

The shape of the curved ridge is determined by the size of each button of 15-key keypad 32, for example. The phrase "size of button" refers to the vertical length and the horizontal length of the button if the button is rectangular. Alternatively, the phrase may refer to the area of the button viewed in the direction of pressing.

The shape may be determined by taking into account the average thumb size of potential users of cellular phone 10. Specifically, since the thumb size can be different among generations of users (between children and adult, for example), such a difference may be reflected in the shape of the curved ridge. In this case, if the intended user of cellular phone 10 is the youth, the degree of curvature can be higher than that of cellular phone 10 intended for adult.

Of the three buttons of each row of 15-key keypad 32 (the buttons on which numerals "1" to "3" are printed, for example), the button at the far left (the button on which the numeral "1" is printed, for example) and the button at the far right (the button on which the numeral "3" is printed, for example) have curved ridges, as described above.

However, the button between them (the button on which the numeral "2" is printed, for example) may have a curved ridge or a straight ridge. If the ridge is curved, the ridge can be the shape of an arc centered at a point on the longitudinal centerline of cellular phone 10, for example.

In this case, the ridge on each button may not be positioned to divide equally the manipulating surface of the button. For example, the distance from the ridge to the upper edge of the button (the edge closer to cursor key 24) is preferably longer than the distance from the ridge to the lower edge of the button. If this is the case, even when the user presses a button on cellular phone 10 with the side face of the thumb, the contact area between the region of the manipulating surface of the button above the ridge and the side face of the thumb increases, so that the button on cellular phone 10 can be pressed with reliability.

According to another aspect, the ridges of the three buttons in a row may be pans of an arc centered at one virtual point Alternatively, the left and right buttons may have a curved ridge similar in shape to corners of housing 18. Here, the corners of housing 18 are the corners that are closer to the user holding cellular phone 10. If this is the case, in addition to the improvement of the operability of the buttons and the reduction of the load on the finger of the user, cellular phone 10 can have a distinctive appearance because of the harmony between the shape of the manipulating surfaces of the buttons and the shape of the corners of housing 18.

Furthermore, the degree of curvature of the ridge of the buttons of each row of 15-key keypad 32 may be equal to that of the other rows or different from that of the other rows. For example, the degree of curvature of buttons 48, 49 and 46 may be equal or different.

In the case where the degree of curvature of the ridge differs among the rows, for example, the degree of curvature (the so-called R-dimension) of the ridge on button 48, which is disposed closer to cursor key 24, can be greater than the degree of curvature of a ridge 44 of button 46, which is disposed farthest from cursor key 24. In this case, for example, it is ensured that a finger (the thumb) comes into contact with or is stopped at button 48, so that button 48 can be pressed with reliability even with a weak pressing manipulation. Alternatively, the degrees of curvature may be in an inverse relationship.

Furthermore, the degree of inclination of the inclined surface of the buttons, which depends on the degree of curvature described above, may vary. For example, the inclination of the upper area of button 48 above the ridge may be greater than the inclination of the upper area of button 46 above the ridge. In this case also, button 48, which is disposed at the farthest position from the bottom end of housing 18 (the end close to the user), can be touched with a finger, so that the operability is improved.

Fig. 3B illustrates a cross-sectional view of housing 18 taken along the line A-B. The apex of each button of 15-key keypad 32 is recessed from a virtual line 300 that extends on the surface of housing 18 of cellular phone 10. Therefore, in the case where cellular phone 10 is of foldable type or has a slide cover for protecting the manipulating surface of housing 18, 15-key keypad 32 does not hinder covering of the manipulating surface of housing 18 with the other housing or the cover.

In such a configuration, as described above with reference to Fig. 3A, the buttons at the far left and the far right of each row of buttons has an end ridged to be smoothly contiguous to housing 18. As a result, the buttons are more likely to come into contact with the finger (the thumb, in particular) of the user of cellular phone 10, so that it is possible to prevent dust from being accumulated in gaps between the buttons of 15-key keypad 32 even if 15-key keypad 32 on housing 18 is recessed.

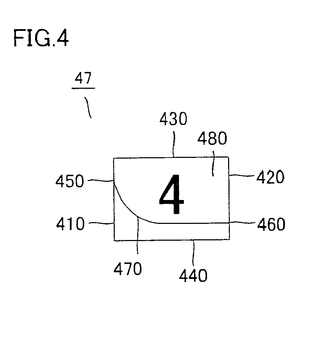

With reference to Fig. 4, the manipulation surface of a button will be described. Fig. 4 illustrates an enlarged view of a button 47 on which a numeral "4" is printed. Specifically, viewed from the front, a manipulating surface 480 of button 47 is rectangular. Manipulating surface 480 has side edges 410, 420, 430 and 440. Side edges 410 and 420 extend in longitudinal direction 100 of cellular phone 10 Side edges 430 and 440 extend in lateral direction 110 of cellular phone 10. Manipulating surface 480 is a convex surface, and a series of protrusions on manipulating surface 480 form a ridge 470. Ridge 470 extends between an end 450 and an end 460. End 450 is located on side edge 410. End 460 is located on side edge 420. Ridge 470 extends from end 460 to end 450 while deviating from a virtual line extending in lateral direction 110.

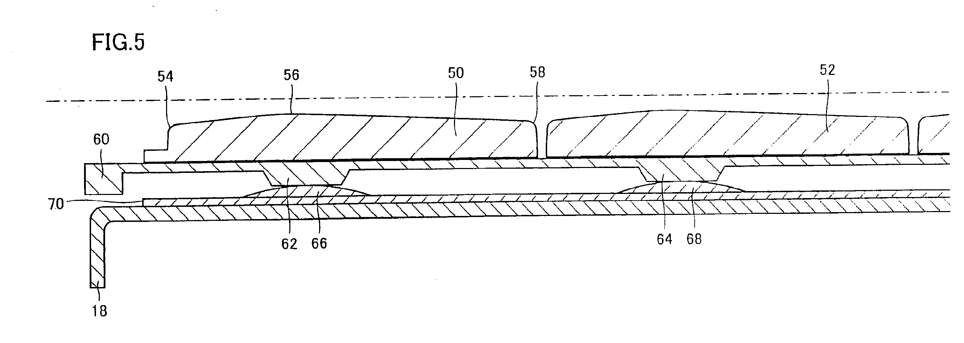

Fig. 5 illustrates an enlarged view of the cross section of housing 18 shown in Fig. 3B. Button 50 of 15-key keypad 32 has an apex 56 on the manipulating surface. A button 52 has a similar apex. Corners 54 and 58 of the manipulating surface of button 50 are chamfered and gently curved (or, in other words, form a large R).

A pad 60 for receiving the force of pressing any of the buttons of 15-key keypad 32 is disposed on the back side of 15-key keypad 32. Pad 60 is made of resin, for example. Pad 60 has protrusions 62 and 64. Protrusion 62 transfers the pressing load exerted on button 50 to a contact sensing part 66. Similarly, protrusion 64 transfers the pressing load exerted on button 52 to a contact sensing pan 68

Contact sensing parts 66 and 68 are piezoelectric elements, for example. The pressing force sensed by contact sensing part 66 or 68 is convened into an electrical signal, which is transferred to a control substrate 70 disposed in housing 18

Control substrate 70 carries out a process determined by the pressing force. The process may be creation and edition of a document. If the operation mode of cellular phone 10 is an E-mail creation mode, a character is input according to the number of times of pressing a particular numeric button. In other words, the pressing force is converted into a signal that represents a character according to the number of times of pressings, and the signal is transmitted to control substrate 70. A processor (not shown) that controls the operation of cellular phone 10 successively accepts input of characters represented by the signals transmitted to control substrate 70.

In such a configuration, apex 56 of button 50 is located at least on a virtual line connecting protrusion 62 and contact sensing part 66. The same holds true for the other buttons. With such a configuration, although each button of 15-key keypad 32 has an inclined surface forming a ridge, pressing of the button can be sensed accurately, and the result of sensing can be transmitted to control substrate 70 with reliability.

As described above, in cellular phone 10 according to this embodiment, 15-key keypad 32 has buttons having a ridge on the manipulating surface. The ridges on the buttons in the far left column and the far right column are curved. Thus, even if the user of cellular phone 10 successively presses buttons on cellular phone 10, an erroneous operation, such as pressing a wrong button, can be avoided.

Furthermore, the curved ridge more easily conforms to the tip (including the side) of the finger (the thumb, for example) of the user. As a result, even if the user presses buttons for a long time, the strain on the finger can be reduced.

Furthermore, the user can sense the contact of the finger with the apex of the ridge on each button. Therefore, the user can input characters by touch typing without always seeing the manipulating surface of 15-key keypad 32. Thus, the operability or user-friendliness of cellular phone 10 is improved

### <First Modification>

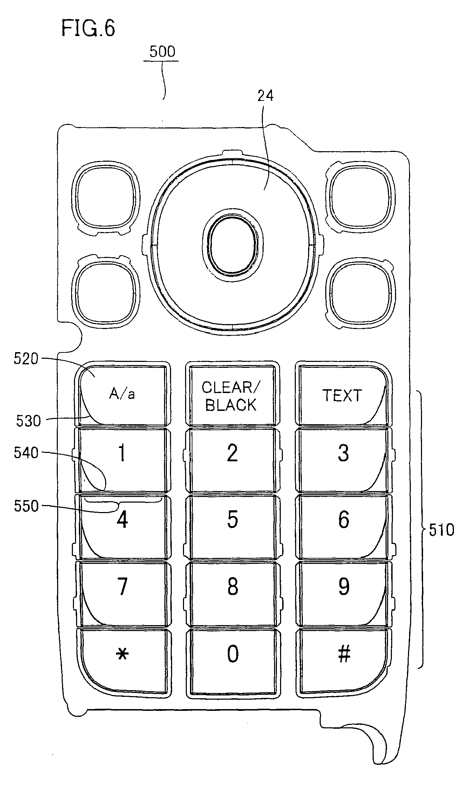

With reference to Fig. 6, a first modification of this embodiment will be described Fig. 6 is a diagram showing a manipulating surface of a housing of a cellular phone 500 according to the first modification Cellular phone 500 has a 15-key keypad 510, the configuration of the manipulating surface of which differs from that of 15-key keypad 32.

Specifically, a ridge 530 on a button 520 extends from a lower edge of button 520 to a left side edge of button 520. The term "lower edge" refers to the lower edge of button 520, which has a rectangular manipulating surface, viewed from the front thereof

With such a configuration, ridge 530 is shorter than the ridge of cellular phone 10 according to the first embodiment. However, since the protrusion is formed toward the left of button 520, the finger is prevented from being off button 520. Furthermore, of the regions of the manipulating surface of button 520 divided by ridge 530, the region closer to a cursor key 24 is inclined toward ridge 530, as in the first embodiment (see Fig. 4).

The button disposed at the far right of 15-key keypad 510 has the characteristics described above.

Thus, according to the first modification, the contact area between button 520 of cellular phone 500 and the finger tends to be large. As a result, the tactile impression of the user of cellular phone 500 can be improved.

### <Second Modification>

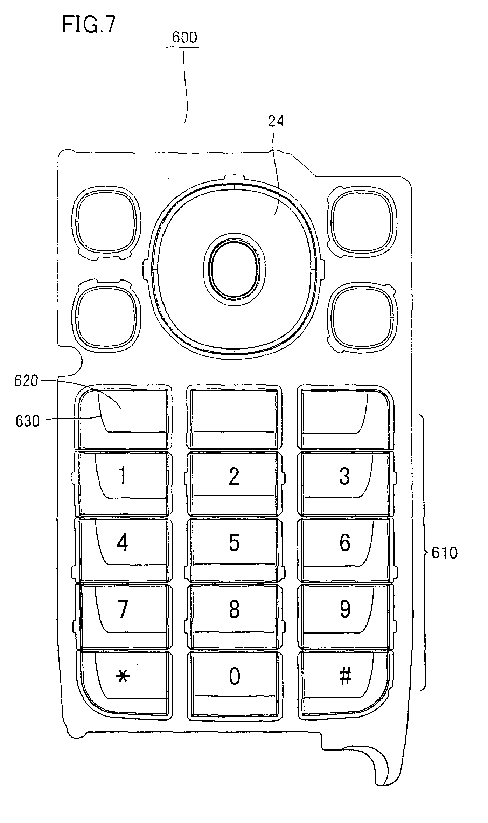

With reference to Fig. 7, a second modification of this embodiment will be described. Fig. 7 is a diagram showing a manipulating surface of a housing of a cellular phone 600 according to the second modification.

Cellular phone 600 has a 15-key keypad 610. On 15-key keypad 610, a button 620 disposed closer to the left side of a housing has a ridge 630. The other buttons have a similar ridge. Ridge 630 includes a straight pan expending in the direction of the row including the button and a curved part. In this case, a region of the manipulating surface of button 620 extending from ridge 630 toward a cursor key 24 is inclined. Ridge 630 forms an apex of button 620. Button 620 having the ridge shaped in this way also easily conforms to the finger of the user of cellular phone 600.

### <Third Modification>

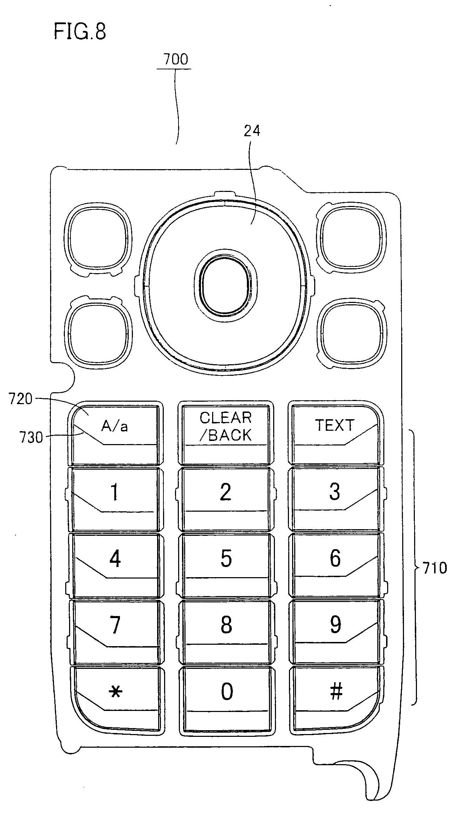

With reference to Fig. 8, a third modification of this embodiment will be described. Fig. 8 is a diagram showing a manipulating surface of a housing of a cellular phone 700 according to the third modification.

Cellular phone 700 has a 15-key keypad 710. On 15-key keypad 710, a button 720 disposed closer to the left side of a housing has a ridge 730. The other buttons (the buttons on which numerals "1", "4" and "7" and an asterisk mark "*" are printed) have a similar ridge.

Ridge 730 includes two straight parts. An apex forming ridge 730 is chamfered. As can be apparently seen from Fig. 8, the ridges formed on the buttons of 15-key keypad 710 have the shape of an inverted trapezoid.

On the other hand, the buttons disposed in the far right column of 15-key keypad 710 (the buttons on the manipulating surface of which "text", "3", "6", "9" and "#" are printed) have a ridge formed symmetrically to ridge 730 with respect to a line extending in a longitudinal direction of cellular phone 700. Each button has an inclined surface extending from the ridge. For example, the inclined surface extending from ridge 730 toward a cursor key 24 is a curved surface centered at a point on a virtual line passing through cursor key 24 of cellular phone 700. Thus, the contact area between the finger of the user of cellular phone 700 and the inclined surface is larger than the contact area between the finger and an ordinary flat manipulating surface, and therefore, the strain on the finger is reduced.

### <Fourth Modification>

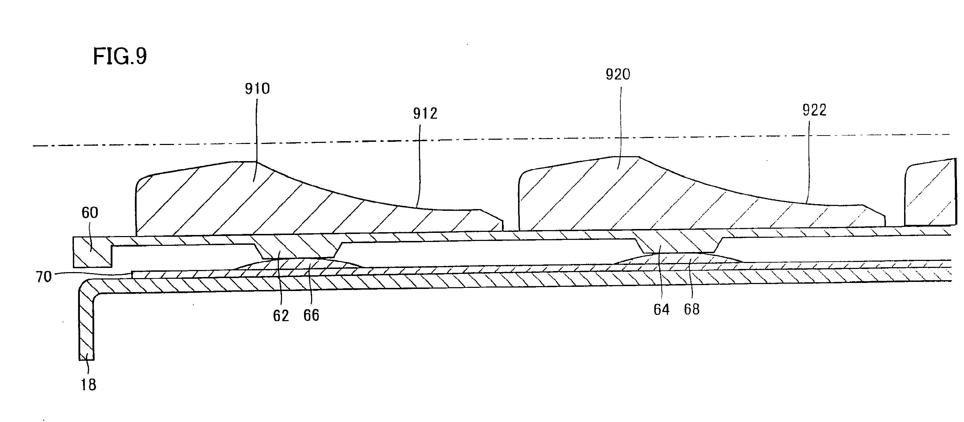

Fig. 9 is a cross-sectional view of a 15-key keypad of a cellular phone according to a fourth modification of this embodiment. Buttons of the cellular phone according to this modification differ from the buttons of 15-key keypad 32 in that the manipulating surfaces are curved.

Specifically, a manipulating surface 912 of a button 910 and a manipulating surface 922 of a button 920 are curved surfaces, and the cross sections thereof are curved lines. With such a configuration, when pressing a button, the tip of the finger more readily comes into contact with the button, and the button is pressed with higher reliability.

### <Fifth Modification>

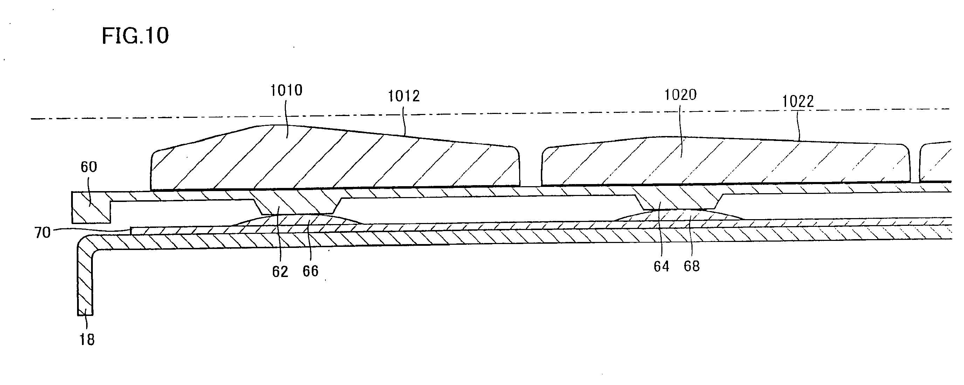

Fig. 10 illustrates a cross-sectional view of a 15-key keypad of a cellular phone according to a fifth modification of this embodiment. Buttons of the cellular phone according to this modification differ from the buttons of 15-key keypad 32 in that the inclination of the manipulating surfaces varies with the row.

Specifically, the inclination of a manipulating surface 1012 of a button 1010 is greater than the inclination of a manipulating surface 1022 of a button 1020. In this case, the user of the cellular phone can easily identify the positions of the buttons based on the difference in inclination, and therefore, an erroneous operation can be avoided.

Furthermore, as illustrated in Fig. 10, in the case where the inclination of the manipulating surfaces of the buttons disposed far from the user (the buttons on which numerals "1", "2" and "3" are printed shown in Fig. 1, for example) is smaller than the inclination of the manipulating surfaces of the buttons disposed close to the user (the buttons on which numerals "7", "8" and "9" are printed, for example), the difference in degree of protrusion of the manipulating surfaces allows the user to easily manipulate the buttons far from the user or move the finger to the buttons far from the user. Thus, the operability of the buttons is improved.

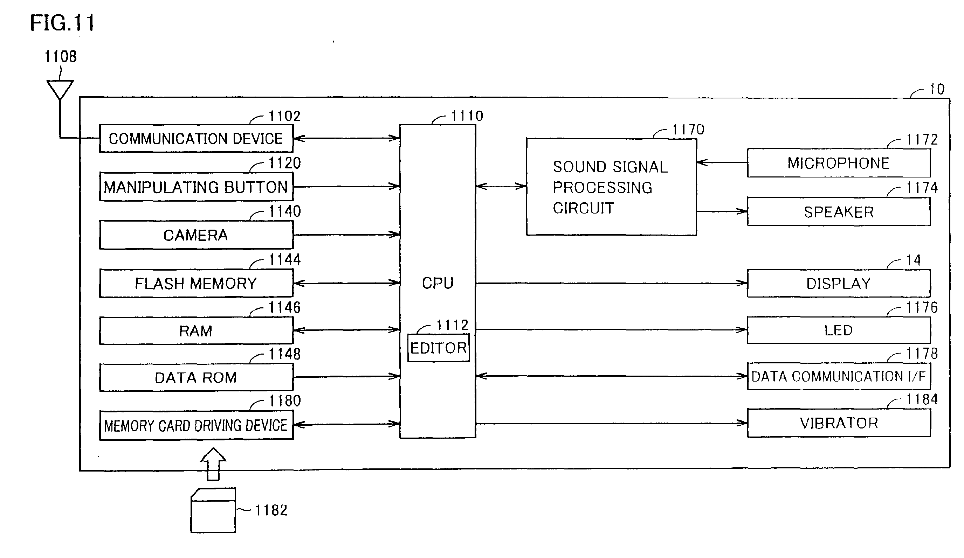

Now, with reference to Fig. 11, a specific configuration of cellular phone 10 according to an aspect of the present invention will be described. Fig. 11 is a block diagram showing a hardware configuration of cellular phone 10. Cellular phone 10 has an antenna 1108, a communication device 1102, manipulating buttons 1120, a camera 1140, a flash memory 1144, a RAM 1146, a data ROM 1148, a memory card driving device 1180, a CPU 1110 that carries out an arithmetic processing, a sound signal processing circuit 1170, a microphone 1172, a speaker 1174, a display 14, a light emitting diode (LED) 1176, a data communication interface (1/F) 1178, and a vibrator 1184. A memory card 1182 can be mounted in memory card driving device 1180.

A signal received at antenna 1108 is sent to CPU 1110 via communication device 1102. CPU 1110 transfers the signal to sound signal processing circuit 1170. Sound signal processing circuit 1170 performs a predetermined signal processing on the signal and outputs the processed signal to speaker 1174. Speaker 1174 outputs a sound based on the signal.

Microphone 1172 receives a voice into cellular phone 10 and outputs a signal according to the voice. Sound signal processing circuit 1170 performs a predetermined signal processing for conversation based on the signal and sends the processed signal to CPU 1110. CPU 1110 converts the signal into a transmission signal and sends the transmission signal to communication device 1102. Communication device 1102 transmits the signal from antenna 1108, and then, the user of cellular phone 10 can enter into a conversation with a person at the other end of the line.

Camera 1140 takes a picture of a subject in response to a manipulation of manipulating buttons 1120 and transmits the signal obtained by taking the picture to CPU 1110.

Flash memory 1144 stores data transmitted from CPU 1110. CPU 1110 can read the data stored in flash memory 1144 and perform a predetermined processing using the data.

RAM 1146 temporarily stores data generated by CPU 1110 based on a manipulation of manipulating buttons 1120. Data ROM 1148 stores data or a program for making cellular phone 10 perform a predetermined operation. CPU 1110 reads the data or program from data ROM 1148 and makes cellular phone 10 perform a predetermined processing The program includes an application that makes CPU 1110 function as an editor 1112.

Memory card driving device 1180 receives memory card 1182. Memory card driving device 1180 reads data from memory card 1182 and transmits the data to CPU 1110. In addition, memory card driving device 1180 writes data output from CPU 1110 to a storage area of memory card 1182.

Sound signal processing circuit 1170 performs a processing on the signal used for conversation as described above. CPU 1110 and sound signal processing circuit 1170 may be integrated with each other.

Display 14 shows an image prescribed based on data output from CPU 1110. For example, if CPU 1110 reads data about a telephone number from flash memory 1144, display 14 shows the telephone number in a display area.

LED 1176 emits light in a predetermined manner based on the signal from CPU 1110. For example, if LED 1176 can emit light of a plurality of colors, LED 1176 emits light of a color associated with the data included in the signal output from CPU 1110.

Data communication I/F 1178 accepts connection of an external communication cable. Data communication I/F 1178 transmits the signal output from CPU 1110 to the outside through the cable. Alternatively, data communication I/F transmits a signal received through the cable to CPU 1110. Vibrator 1184 vibrates at a predetermined frequency based on the signal output from CPU 1110.

According to an aspect, CPU 1110 functions as editor 1112 by executing a program stored in data ROM 1148. More specifically, CPU 1110 accepts character input based on a signal from manipulating buttons 1120 and creates an E-mail message or other documents. Manipulating buttons 1120 include 15-key keypad 32. As described above, since 15-key keypad 32 has ridges, the strain on the user during character input can be reduced. The basic operation of cellular phone 10 can be readily understood by those skilled in the art and therefore will not be repeatedly described.

As described in detail above, the cellular phones according to this embodiment and modifications thereof have a 15-key keypad with ridges and inclined surfaces as a mechanism for accepting a pressing manipulation. With such a configuration, when the user presses the buttons of the 15-key keypad, the strain on the finger is reduced. In particular, when the user successively presses a plurality of buttons to input characters, finger fatigue is reduced.

The buttons of the 15-key keypad of the cellular phone according to this embodiment is made of resin. However, the kind of the resin is not limited to the existing ones. For example, a curable resin may be used. In this case, the shape of each button of 15-key keypad 32 can be changed until a certain length of time elapses. Then, after a time specific to the resin elapses, the shape cannot be changed. If this is the case, the user's characteristics of the way of pressing the buttons of cellular phone 10 are reflected in the shape of the buttons, and therefore, the usability of cured buttons of cellular phone 10 for the user is improved.

The present invention can be applied to a cellular phone or other portable information processing terminals. More specifically, the present invention can be applied to an information processing terminal that has a manipulation part that accepts a pressing manipulation.

Although the present invention has been described and illustrated in detail, it is clearly understood that the same is by way of illustration and example only and is not to be taken by way of limitation, the scope of the present invention being interpreted by the terms of the appended claims.

## Claims

1. An information processing terminal (10), comprising
a housing (18); and
a plurality of manipulating parts (32) arranged side by side in a first direction of said housing and configured to accept a pressing manipulation for providing an input to said information processing terminal,
wherein a manipulating part disposed at one end of said plurality of manipulating parts arranged in said first direction has a ridge (470), which is formed by a series of protrusions, on a manipulating surface for accepting said pressing manipulation, and
said ridge extends in a direction from the other end to said one end of said plurality of manipulating parts in such a manner that the ridge deviates from a virtual line extending in said first direction.

2. The information processing terminal according to claim 1, wherein said ridge includes a curved part.

3. The information processing terminal according to claim 1, wherein said ridge includes a straight part.

4. The information processing terminal according to claim 1, further comprising a display part (14) configured to display an image,
wherein said ridge is curved toward said display part while extending in the direction form said the other end to said one end.

5. The information processing terminal according to claim 4, wherein an area of the manipulating surface for accepting said pressing manipulation that extends from said ridge toward said display part is curved or flat in cross section.

6. The information processing terminal according to claim 4, wherein an area of the manipulating surface for accepting said pressing manipulation that extends from said ridge toward said display part is tapered in cross section.

7. The information processing terminal according to claim 1, wherein an end (450) of said ridge located toward said one end is located on a side edge (410) extending in a second direction perpendicular to said first direction of side edges (410, 420, 430, 440) of the manipulating surface for accepting said pressing manipulation.

8. The information processing terminal according to claim 7, wherein an end (460) of said ridge located toward said the other end is located on a side edge (420) extending in said second direction of the side edges of the manipulating surface for accepting said pressing manipulation.

9. The information processing terminal according to claim 7, wherein an end (540) of said ridge located toward said the other end is located on a side edge (550) extending in said first direction of the side edges of the manipulating surface for accepting said pressing manipulation.

10. The information processing terminal according to claim 1, wherein a plurality of rows of said manipulating parts are arranged in a second direction perpendicular to said first direction.

11. The information processing terminal according to claim 10, wherein the inclination of said manipulating surfaces of said plurality of manipulating parts arranged at said one end in said second direction varies among the manipulating parts.

12. The information processing terminal according to claim 1, wherein another ridge, which is formed by a series of protrusions, is formed on a manipulating surface of a manipulating part disposed at said the other end of said plurality of manipulating parts, and
said another ridge extends in a direction from said one end to said the other end in such a manner that said another ridge deviates from said virtual line.

13. The information processing terminal according to claim 12, wherein said another ridge includes a curved part.

14. The information processing terminal according to claim 12, wherein said another ridge includes a straight part.

15. The information processing terminal according to claim 12, further comprising a display part (14) configured to display an image,
wherein said another ridge extends toward said display part in the direction form said one end to said the other end.

16. The information processing terminal according to claim 15, wherein an area of the manipulating surface for accepting said pressing manipulation that extends from said another ridge toward said display part is curved or flat in cross section.

17. The information processing terminal according to claim 15, wherein an area of the manipulating surface for accepting said pressing manipulation that extends from said another ridge toward said display part is tapered in cross section.

18. The information processing terminal according to claim 12, wherein an end of said another ridge located toward said the other end is located on a side edge extending in a second direction perpendicular to said first direction of side edges of the manipulating surface for accepting said pressing manipulation.

19. The information processing terminal according to claim 18, wherein the other end of said another ridge located toward said one end is located on a side edge extending in said second direction of the side edges of the manipulating surface for accepting said pressing manipulation.

20. The information processing terminal according to claim 18, wherein the other end of said another ridge located toward said one end is located on a side edge extending in said first direction of the side edges of the manipulating surface for accepting said pressing manipulation.

21. The information processing terminal according to claim 12, wherein said ridge and said another ridge form a U-shape.

22. The information processing terminal according to claim 1, wherein said plurality of manipulating parts (32) include a plurality of buttons for accepting input of a number.

23. The information processing terminal according to claim 1, wherein said plurality of manipulating parts includes a plurality of buttons for accepting input of a character.

24. The information processing terminal according to claim 23, further comprising an editor (1112) configured to create a document based on a character input by manipulation of said plurality of buttons.

25. The information processing terminal according to claim 1, further comprising a sensing part (66) configured to sense said pressing manipulation on any of said plurality of manipulating parts,
wherein said sensing part has a protrusion, and the position of said protrusion corresponds to the position of said ridge formed on said manipulating surface.
